# EUROPÄISCHE PATENTSCHRIFT

(11) **EP 2 363 873 B1**
(45) Veröffentlichungstag und Bekanntmachung des Hinweises auf die Patenterteilung: **03.10.2012**
(21) Anmeldenummer: 11164426.6
(22) Anmeldetag: 31.05.2007
(51) Int. Cl.: H01J 9/50, H01J 9/52, C09K 11/01

(54) **Verfahren zur Rückgewinnung seltener Erden aus Leuchtstofflampen**
Method for recovering rare earths from illuminant lamps
Procédé de récupération de terres rares à partir de lampes fluorescentes

(30) Priorität: 02.06.2006 DE 102006025945
(43) Veröffentlichungstag der Anmeldung: 07.09.2011
(62) Teilanmeldung aus: 07729706.7
(73) Patentinhaber: OSRAM AG, 81543 München (DE)
(72) Erfinder: Otto, Robert, 89391 Stadtbergen (DE); Wojtalewicz-Kasprzak, Agnieszka, 49824 Emlichheim (DE)

(56) Entgegenhaltungen:
- EP-A1- 0 157 249
- DD-A1- 246 551
- DE-C1- 19 617 942

## Beschreibung

### Technisches Gebiet

Die Erfindung geht aus von einem Verfahren zur Rückgewinnung Seltener Erden aus Leuchtstofflampen gemäß dem Oberbegriff des Anspruchs 1. Derartige Verfahren sind insbesondere für lineare, aber auch für kompakte Leuchtstofflampen geeignet.

### Stand der Technik

Leuchtstoffabfälle wurden früher oft als Sondermüll deponiert. Die heute bekannten Verfahrensansätze zur Aufbereitung von Leuchtstoffabfällen beschreiben hauptsächlich Verfahren, die eine Rückgewinnung der Einzelkomponenten, insbesondere der Seltenerdleuchtstoffe, zum Ziel haben.

Die entwickelten Verfahren sollen mit wirtschaftlich vertretbaren Mitteln die erforderliche Qualität erreichen, die eine uneingeschränkte Wiederverwertung der Aufbereitungsprodukte als Leuchtstoff zulässt.

Die DE-OS 34 10 989 beschreibt ein Verfahren, basierend auf einer zweistufigen sauren Laugung mit anschließender Fällung Seltener Erden mit Oxalsäure. In der ersten Stufe wird das Halophosphat vom Dreibandenleuchtstoff-Gemisch durch die Laugung mit Salpetersäure abgetrennt. Das verbleibende Seltenerd- Leuchtstoffgemisch wird wieder mit einer Salpetersäure bei mindestens 90°C behandelt. Die Selten-Erd-Oxide gehen in Lösung. Nach der Fest-Flüssig Trennung wird der Feststoff, bestehend aus den schwerlöslichen Aluminat-Leuchtstoffen gewaschen, getrocknet und geglüht. Aus dem Filtrat werden das Yttrium und Europium durch Zusatz von 10%iger Oxalsäure als Mischoxalat ausgefällt.

Die DD-A 246 551 beschreibt eine vollständige Auflösung der Selten-Erdhaltigen Leuchtstoffkomponente in Salz- oder Salpetersäure bei 90°C. Zur Abtrennung von zweiwertigen Metallen werden die Seltenen Erden aus der Lösung anschließend mit Ammoniak als Hydroxide gefällt. Die Hydroxide werden in Salz- oder Salpetersäure wieder aufgelöst und dann als Oxalate ausgefällt. Dieses Seltenerd-Oxidgemisch eignet sich in der vorliegenden Form allerdings nicht für den direkten Einsatz in der Leuchtstoffproduktion, sondern nur als Zwischenprodukt für einen zusätzlichen aufwendigen Prozess zur Trennung von Seltenerdelementen.

Bei der DE-A 196 17 942 basiert die Aufbereitung auf der Behandlung der Leuchtstoffabfälle mit verdünnter Salzsäure. Die Halophosphatleuchtstoffen werden weitestgehend mit verdünnter Salzsäure unter Zusatz von Oxidationsmittel in Lösung gebracht. Nach der Fest/Flüssig Trennung werden im Rückstand gebliebene Seltenerdleuchtstoffe gründlich mit entionisiertem Wasser gewaschen, von der wässrigen Phase abgetrennt, getrocknet und bei T > 1200°C geglüht.

In der DE-A 199 18 793 wird ein Verfahren für Dreibandenleuchtstoffe beschrieben, mit dem das Yttriumeuropiumoxid als Einzelkomponente zurückgewonnen wird. Seine Qualität lässt eine uneingeschränkte Wiederverwertung in der Leuchtstoffproduktion zu. In der ersten Stufe werden Quecksilber und Halophosphatleuchtstoffe mittels Salpetersäure aus dem Leuchtstoffabfall herausgelöst. In der zweiten Stufe wird das Seltenerd-Leuchtstoffgemisch mit Carbonatlauge behandelt. Das Yttriumeuropiumoxid geht selektiv in Lösung und wird als Yttriumeuropiumcarbonat ausgefällt und anschließend zum Oxid geglüht.

Aus der JP-A 11071111 ist ein Verfahren zur Extraktion von Selten Erd-Verbindungen bekannt. Eine Substanz, die Seltene Erd-Metalle enthält, wird mechanochemisch über eine vorbestimmte Zeit behandelt um die Kristallstruktur zu ändern. Die resultierende Substanz wird dann mit einer Säure gelaugt, und zwar bei niedriger Konzentration, um die Selten-Erd-haltige Verbindung zu extrahieren. Seltene Erden sind hier insbesondere Y und Sc oder auch ein Element aus der Gruppe der Lanthanoide. Die mechanochemische Behandlung erfolgt bevorzugt mit einem hochenergetischen Stößel. Die Säure mit niedriger Konzentration ist bevorzugt hydrochlorische Säure und schweflige Säure bei einer Konzentration von N ≤ 1. da die Selten ErdVerbindung aus dem Leuchtstofflampen-Abfall extrahiert werden kann unter vergleichsweise milden Bedingungen, kann die Arbeitsumgebung hier relativ sicher gemacht werden. insbesondere kann der Leuchtstofflampenabfall als vielversprechendes zukünftiges städtische Quell für Seltene Erden eingestuft werden. dies schafft eine Wiederverwertungsmöglichkeit für seltene Rohstoffe.

Diese Publikationen verfolgen meist das Ziel, Leuchtstoffe durch selektives Lösen "direkt" wiederzugewinnen. Die Leuchtstoffe werden dabei entweder nach dem Lösen als feste Rückstände isoliert oder im Fall von Yttrium-Europium Oxid "YOE", also Y₂O₃:Eu, nach dem Lösen wieder ausgefällt. Beim ersten Verfahren verhindern die im Rückstand verbliebenen feinsten Glassplitter und die Tatsache, dass der Rückstand alle schwerlöslichen Komponenten enthält, den Einsatz als Leuchtstoff in ausreichender Qualität. Bei Y₂O₃:Eu wird die Lichtausbeute durch Mitfällen von Killerelemente (z.B. Calcium, Terbium) ebenfalls soweit verringert, dass ein Einsatz in der Leuchtstofflampenfertigung nicht möglich ist.

Die andern Publikationen zielen zwar auf die Rückgewinnung der Seltenen Erden in Form verschiedener Verbindungen. Bei dem zweiten Verfahren ist es allerdings äußerst unwahrscheinlich, dass Terbium quantitativ zurückgewonnen wird. Das im fünften Verfahren angewendete Mahlverfahren erhöht zwar die Ausbeute an Terbium, jedoch zeigen die Daten für gelöstes Aluminium und Magnesium, dass dieser Effekt nur zu einem geringen Teil auf den Aufschluss schwerlöslicher Aluminate zurückzuführen ist.

Da gerade Terbium heutzutage eines der wirtschaftlich bedeutendsten und teuersten Selten-Erd-Elemente ist, muss gerade auf die vollständige Extraktion dieses Elements besonderer Wert gelegt werden
Der Großteil des Europiumanteils liegt zwar als leichtlösliche Verbindung Y₂O₃:Eu (Dreibanden Rotleuchtstoff) vor, da Europiumverbindungen aktuell die zweitteuerste Komponente bei der Herstellung von Dreibandenleuchtstoffen sind, ist auch die Extraktion von Europium aus schwerlöslichen Verbindungen gerade unter wirtschaftlichen Gesichtspunkten nicht zu vernachlässigen.

### Darstellung der Erfindung

Die Aufgabe der vorliegenden Erfindung ist es, ein Verfahren anzugeben, das die Rückgewinnung von Elementen wie Terbium, Europium und Yttrium für den Einsatz in der Leuchtstoffproduktion gestattet.

Diese Aufgabe wird gelöst durch die kennzeichnenden Merkmale des Anspruchs 1.

Besonders vorteilhafte Ausgestaltungen finden sich in den abhängigen Ansprüchen.

Bei der Verwertung von Leuchtstofflampen fällt eine vom Lampenkolben separierte leuchtstoffhaltige Fraktion an. Dieses Leuchtstoffpulver liegt vor als ein Gemisch von Halophosphat-, Dreibanden-, sowie Sonderleuchtstoffen, das unter anderem durch Glassplitter und Metalle und -unterschiedlich starkmit Quecksilber kontaminiert ist. Eine direkte Rückführung in den Produktionsprozess ist deswegen nicht möglich. Die Leuchtstoffabfälle, in Deutschland ca. 250 bis 300 Tonnen pro Jahr, werden aufgrund ihrer Toxizität und unzureichender Aufbereitungsmöglichkeiten bisher in Untertagedeponien eingelagert.

Sie stellen aufgrund des Selten-Erd-Gehaltes von ca. 10 Gew. -%, berechnet als Oxid, ein nicht unerhebliches Rohstoffpotential dar, zumal der Gehalt an den knappen und damit teueren Selten-Erd-Elementen Terbium und Europium höher ist als in den besten bekannten natürlichen Quellen.

Das neuartige Verfahren verfolgt daher das Ziel, die Leuchtstoffabfälle einem geregelten Recycling zuzuführen. Dabei werden die Seltenen Erden (SE) als SE-Oxide in einer Qualität zurückgewonnen, die der aus natürlichen Erzen hergestellten Produkten entspricht und die somit einen uneingeschränkten Einsatz in Produktion neuer Leuchtstoffen zulässt. Bisherige Recycling-Verfahren enden entweder in einem Leuchtstoff schlechter Qualität, der für die Lampenfertigung unbrauchbar ist, oder in einem Verfahren, das wenig effektiv ist, so daß nur ein Bruchteil der im Abfall vorhandenen Selten Erd-Leuchtstoffe genutzt wird. Der wesentliche Vorteil des neuen Verfahrens ist, daß der Recyclingkreislauf einen Selten Erd-Trennprozess einschließt und damit zu uneingeschränkt verwendbaren hochreinen Selten Erd-Oxiden führt, die mit anderen Verfahren prinzipiell nicht gewonnen werden können.

Für dieses Ziel mussten folgende Probleme gelöst werden:
- die quantitative und qualitative Bestimmung der stofflichen Zusammensetzung der leuchtstoffhaltigen Abfälle, insbesondere dessen SE-Gehalt und die vorhandenen Verunreinigungen;
- Entwicklung mechanischer Verfahren zur Anreicherung SE - haltigen Leuchtstoffe durch Abtrennen von Verunreinigungen (z.B. Glassplitter);
- Entwicklung eines Extraktionsverfahrens zur möglichst quantitativen Rückgewinnung der Seltenen Erden;
- Weiterverarbeitung des SE - Extraktes zu Verbindungen, deren Qualität kommerziell verfügbaren Rohstoffen, insbesondere für die Leuchtstoffherstellung, entspricht;
- Sämtliche Verfahrensschritte werden unter Berücksichtigung von Reststoff aus Abfallaufkommen optimiert.

Ziel des neu entwickelten, im folgenden beschriebenen Verfahrens ist es, nach verschiedenen Trenn-, Löse- und Aufschlussprozessen durch Fällung eine synthetische Selten Erd Verbindung zu gewinnen, deren Anteil an wirtschaftlich bedeutenden Seltenen Erden mindesten so hoch ist wie in natürlich vorkommenden Erzen. Vor allem der Anteil an Terbium und Europium ist bedingt dadurch, dass ein Leuchtstoffgemisch als Ausgangsmaterial eingesetzt wird, deutlich höher als in natürlichen Vorkommen.

Der Alt-Leuchtstoff ist ein Gemisch von unterschiedlichen Leuchtstoffen, dessen Hauptbestandteile Halophosphat- und Dreibandenleuchtstoffe sind. Dieses Leuchtstoffgemisch ist vor allem mit Lampenkomponenten wie Kolbenglas, Metall (Wendeln, Stromzuführungen, Sockel), Kunststoff (Sockel, Isolierungen) und Kitt verunreinigt. Je nach Herkunft und Vorbehandlung (Entquicken) des Alt-Leuchtstoffs kann auch Quecksilberkontamination auftreten. Im folgenden wird von entquicktem Material ausgegangen.

Typische Gewichtsanteile beim Alt-Leuchtstoff sind in Tab 1. gezeigt.

**Tab. 1**

| Bestandteil | Anteil in Gew-% |
|---|---|
| Grobfraktion | 65-70% |
| Feinfraktion | 25-30% |
| Seltene Erden | ca. 10 % |
| (als Oxid in der Feinfraktion) | (abhängig vom Ausgangsmaterial) |

Die Prozessschritte können abhängig von den im Alt-Leuchtstoff vorhandenen Leuchtstofftypen und ihren Mengenanteilen beliebig kombiniert werden.

Durch das vollständige Lösen Selten Erd - haltiger Leuchtstoffkomponenten werden auch die schwerlöslichen Lampenreste (z.B. Glas) abgetrennt.

Der Prozess kann aus folgenden Modulen aufgebaut sein. Diese können beliebig kombiniert werden. Schemata 1 bis 4 stellen mögliche Beispiele für Prozessabläufe dar. Diese Prozessschritte sind für Leuchtstoff-Recycling bisher nicht angewendet worden. Dabei wird erstmals erreicht, die Seltenen Erden weitestgehend zu extrahieren und wieder in Rohstoffe umzuwandeln, insbesondere in Form von Oxiden. Diese Prozessabfolge ist dahingehend optimiert, dass bei gegebenem Prozessaufwand die Ausbeute an den teueren und gerade zur Leuchtstoffherstellung benötigten Seltenen Erden maximal wird. Der große Vorteil dieser Rückgewinnung ist, dass nur diese für die Lampen-Leuchtstoffe benötigten Rohstoffe im Vormaterial enthalten sind, während bei jungfräulichen Erzen alle möglichen weiteren Seltenen Erden enthalten sind, die nur schwer abzutrennen sind.

Die einzelnen Prozessschritte sind:
**1.** Mechanisches Abtrennen von Grobanteilen.
**2.** Abtrennen des Halophosphats.
**3.** Extraktion in Säuren leichtlöslicher SE - Leuchtstoffe (haupts. Y, Eu - Oxid)
**4.** Extraktion in Säuren schwerlöslicher SE - Leuchtstoffe (z. B. SE - Phosphate)
**5.** Aufschluss der verbleibenden SE - haltigen Komponenten (z.B. SE - Aluminate)
**6.** Endbehandlung.

Der erste Schritt ist das Mechanische Abtrennen von Grobanteilen.

Grobe Restbestandteile der Leuchtstofflampen wie Glassplitter, Metall-, Kunststoff oder Kittreste werden entfernt.

Da die Seltene Erden enthaltenden Dreibandenleuchtstoffe typischerweise mittlere Korngrößen d₅₀ <10 µm aufweisen und kaum Kornanteile über 20µm haben, wird mit möglichst geringer Maschenweite gesiebt um bestmögliche Anreicherung zu erzielen.

Die Siebung kann je nach Verfahren ein- oder mehrstufig ausgeführt werden.

Die Maschenweite der feinsten Siebung hängt ebenfalls von den eingesetzten Verfahren ab und liegt typischerweise bei 25 µm Maschenweite für einen trockenen bzw. bei 20 µm für einen nassen Siebprozess.

Das Feingut wird mit chemischen Verfahren weiter aufgearbeitet.

Der zweite Schritt ist das Abtrennen des Halophosphats. Hier gibt es mehrere Möglichkeiten.

Die erste ist das Kalte Laugen. Säuren (z.B. Salzsäure) greifen im Temperaturbereich unter 30°C Yttriumeuropiumoxid, den am besten säurelöslichen der Dreibandenleuchtstoffe, gar nicht oder nur geringfügig an. Die übrigen Komponenten, besonders die Aluminate, sind unter diesen Bedingungen beständig und verbleiben im unlöslichen Rückstand.

Nach der Fest-Flüssig - Trennung wird der die Seltenen Erden enthaltende Rückstand dem nächsten Bearbeitungsschritt zugeführt und das Filtrat zur Abwasseraufbereitungsanlage geleitet.

Eine zweite Möglichkeit ist das heiße Laugen. Selten Erd Oxide lösen sich im Gegensatz zu Halophosphaten erst im Bereich zwischen 60°C und 90 °C in Säuren (z.B. HCl). Bei den herrschenden Bedingungen (pH = 0, T = 90°C) wird nicht nur Halophosphat und Yttriumeuropiumoxid rasch aufgeschlossen, sondern auch andere Leuchtstoffe werden angegriffen, so dass weitere Seltene Erden zum Teil in Lösung gehen.

Wenn in der Lösung die Calcium-lonen in sehr hohen Konzentration vorliegen, fallen sie auf Grund ihres Löslichkeitsproduktes bei der Selten- Erd-Oxalatfällung mit aus und sollten abgetrennt werden.

Die Trennung von Calcium und Seltenen Erden erfolgt durch die Fällung als Sulfat. Nach der Fest-Flüssig - Trennung bleibt Calciumsulfat (Gips) im Rückstand, das Filtrat enthält die Seltenen Erden.

Eine vereinfachte Abtrennung von Calciumionen aus Halophosphat wird durch das dargestellte Verfahren zur Halophosphatabtrennung mit Schwefelsäure erreicht. In der stark, entsprechend pH = 0 bis 1, schwefelsauren Lösung löst sich das Halophosphat bei Umgebungstemperatur rasch auf. Die im weiteren Verfahrensablauf störenden Ca²⁺ - lonen werden vollständig als unlösliches Calciumsulfat ausgefällt. Die andere Leuchtstoffpulverkomponente, wie in Säuren leichtlösliche SE - Oxide und schwerlösliche SE - Phosphate, werden auch durch die stark schwefelsaure Lösung in Raumtemperatur angegriffen. Dabei können sich in Säure schwerlösliche Doppelsulfate bilden, die durch Auswaschen des Rückstands mit kaltem Wasser in Lösung gehen.

Enthält das Feingut hohe Anteile von Halophosphat, kann dieser Anteil vor der naßchemischen Behandlung bevorzugt durch Schweretrennung reduziert werden. Zusammen mit dem Halophosphat werden vorteilhaft in diesem Schritt auch andere Verunreinigungen abgetrennt, deren Dichte unter dem für die Abtrennung von Halophosphat gewählten Dichtewert liegt.

Ein weiterer dritter Schritt ist die Extraktion der leicht in Säuren löslichen SE - Verbindungen.

Von den leicht löslichen SE - Verbindungen ist im Alt-Leuchtstoff hauptsächlich Selten Erd Oxid (Y₂O₃:Eu) vorhanden, das bei erhöhter Temperatur, bevorzugt zwischen 60 ° und 90 °C, löslich ist.

Das Auflösen der SE - Oxide ist in Salzsäure bzw. in Schwefelsäure möglich.

In diesem oder höheren Temperaturbereich gehen die Seltenerdoxide vollständig in Lösung, und die schwerlöslichen Aluminate verbleiben im Rückstand.

Ein weiterer vierter Schritt ist die Extraktion der schwer in Säuren löslichen SE - Verbindungen.

Zur Gewinnung der Seltenen Erden aus dem schwerlöslichen Lanthanphosphat mit Cer und Terbium dotiert wird dieser Leuchtstoff entweder in Säuren oder in Laugen gelöst, wobei man diese Verfahren als sauren oder alkalischen (bzw. basischen) Aufschluss bezeichnet. Beim sauren Aufschluss wird das Phosphat in 120 - 230 °C heißer, konzentrierter Schwefelsäure gelöst, während die sehr stabilen Aluminate wie CAT und BAM ungelöst bleiben. Nach der Fest-Flüssig - Trennung liegen die Seltenen Erden entweder in ionischer Form im Filtrat oder als schwerlösliche Doppelsulfate vor. Durch Auswaschen des Rückstands mit kaltem Wasser werden die Doppelsulfate in Lösung gebracht.

Ein weiterer fünfter Schritt ist der Aufschluss der verbleibenden SE - haltigen Komponenten.

Im unlöslichen Rückstand der vorangegangenen Prozessschritte verbleibt ein Großteil der in Leuchtstofflampen eingesetzten Aluminatleuchtstoffe, wie insbesondere Bariummagnesiumaluminat, Europium dotiert (BAM) und Cermagnesiumaluminat, Terbium dotiert (CAT).

Eine erste Möglichkeit ist dafür der alkalische Aufschluss.

Diese Leuchtstoffe werden im alkalischen Aufschluss entweder mit Kali- oder Natronlauge oder mit Soda/Potasche Schmelze aufgeschlossen.

Im ersten Fall wird das Aluminatgemisch durch Behandlung mit 150 °C heißer 35%-iger Natron- oder Kalilauge unter Druck in das Gemisch der unlöslichen Hydroxide überführt. Hier werden auch schwerlösliche Phosphate, wie Lanthanphosphat, aufgeschlossen.

Beim alkalischen Aufschluss werden die Aluminate mit einer Mischung von Soda/Pottasche geschmolzen. Der Schmelzkuchen wird mit heißem Wasser bzw. mit Säure extrahiert.

Die ungelösten Reststoffe werden in beiden Fällen abzentrifugiert und als Abfall deponiert.

Eine zweite Möglichkeit für den fünften Schritt, der zusätzlich oder alternativ zur ersten Möglichkeit durchgeführt werden kann, ist der saure Aufschluss.

Hier werden die Aluminate in Säure, beispielsweise Phosphor oder Schwefelsäure, bei erhöhter Temperatur und bei Bedarf auch bei einem erhöhten Druck aufgeschlossen. Die Lösungen enthalten die Seltenen Erden. Die bei Verwendung von Schwefelsäure entstehenden Doppelsulfate werden bei Bedarf mit kaltem Wasser aus den Rückständen extrahiert.

Ein sechster Schritt ist schließlich die Endbehandlung und Fällung.

Die Seltenen Erden werden aus den, in den verschiedenen Prozessschritten erhaltenen Lösungen gefällt.

Die Fällung der Seltenen Erden erfolgt mit entweder mit Oxalsäurelösung als Oxalate oder mit Ammoniak um die Seltenerde in Form basischer Salze auszufällen.

Die Oxalate werden anschließend zu Oxiden verglüht.

Die so erhaltenen Selten Erd Verbindungen werden als "synthetisches Erz" im Standard Trennprozess für Seltene Erden eingesetzt und nach der Trennung zu beliebigen SE Verbindungen weiterverarbeitet.

Besondere Vorteile des neuartigen Verfahrens in maximal sechs Schritten sind:
Bei der Leuchtstofflampenverwertung fällt das Leuchtstoffpulver als eine separierte Fraktion an. Die quecksilberhaltige Leuchtstoffabfälle sind als "besonders überwachungsbedürftiger Abfall" angeordnet und sollen als Sonderabfall eingelagert werden. Der zielgerechte Recyclingprozess vermindert die Masse und Volumen des zur Deponierung vorgesehenen Sonderabfall, das trägt zur Senkung der Transport- und Deponiekosten, sowie zur Entlastung der Deponie und Schonung des menschlichen Lebensraums bei.

Die Leuchtstoffabfälle stellen aufgrund ihrer Inhaltstoffe, besonders Selten-Erd-Elementgehaltes ein Rohstoffpotential dar. Die Rückgewinnung der kostbaren SE-Elementen in einer Form, die eine Wiederverwertung in Leuchtstoffproduktion erlaubt, entlastet die natürlichen Ressourcen. Die relevanten Stoffe werden nicht auf Deponie, sondern sortenrein in direkt einsetzbare SE-Verbindungen aufgearbeitet. Bei der Herstellung von SE-haltigem Produkt bevorzugt Lampenleuchtstoffen, können diese Verbindungen, bevorzugt Oxide ohne Einschränkung in etablierte Prozesse einfließen. Sowohl der Fertigungsablauf selbst als auch die Qualität des Endproduktes entsprechen dem Standardverfahren.

Das Leuchtstoffrecycling ist nicht nur aus ökologischen, sondern auch aus ökonomischen Gründen sinnvoll. Es wird neben wichtigen Rohstoffen auch die für Rohstoffgewinnung nötige Energie gespart.

Die bei dem Recyclingprozess der Leuchtstoffabfälle anfallenden Reststoffe sind weniger umweltschädlich als das primär bei der Lampenverwertung anfallende Leuchtstoffpulver. Diese Verminderung der Schadstoffe erleichtert das Entsorgen dieser Nebenprodukte.

Die neue Recyclingtechnologie entspricht den Anforderungen der zeitgemäßen Abfallentsorgung. Das Leuchtstoffrecycling hilft beim Aufbau der modernen Recyclingsysteme, wobei die Stoffkreisläufe tatsächlich auf die wirtschaftliche und umweltfreundliche Weise geschlossen werden.

### Kurze Beschreibung der Zeichnungen

Im Folgenden soll die Erfindung anhand mehrerer Ausführungsbeispiele näher erläutert werden. Die Figuren zeigen:
- Fig. 1: ein Ablaufschema für ein Leuchtstoff-Recycling gemäß der Erfindung;
- Fig. 2 bis 5: jeweils ein alternatives Ablaufschema.

### Bevorzugte Ausführungsform der Erfindung

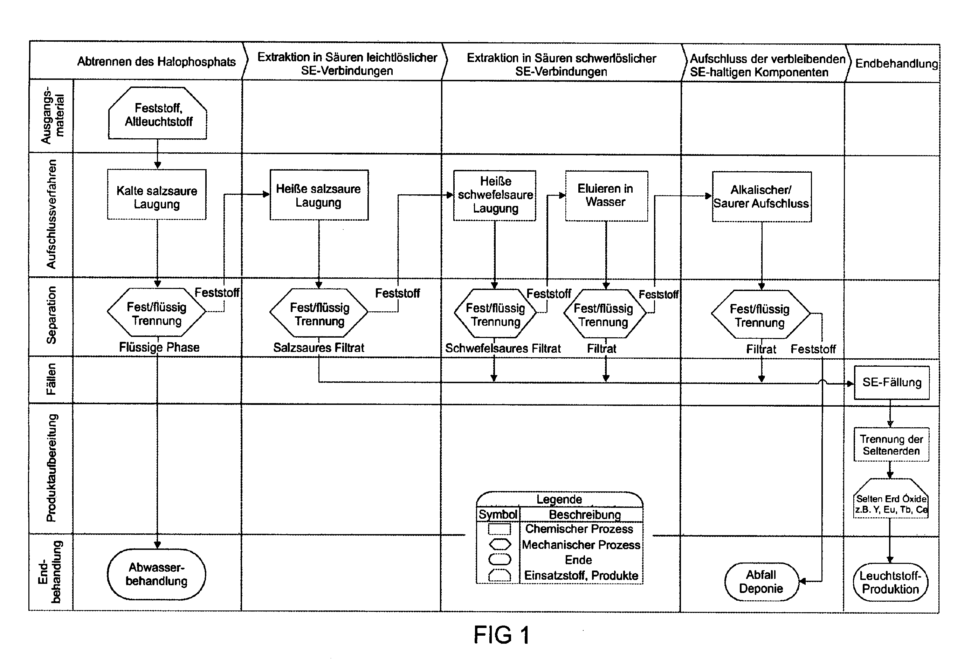

Figur 1 zeigt ein Schema für den Ablauf des Recyclings. Halophosphat wird im ersten Schritt des Verfahrens durch kalte Laugung abgetrennt. Die Extraktion der Seltenen Erden erfolgt abhängig von der Löslichkeit der vorliegenden Verbindungen in drei separaten Stufen. Die flüssigen Phasen werden gesammelt und zu Selten Erden weiterverarbeitet.

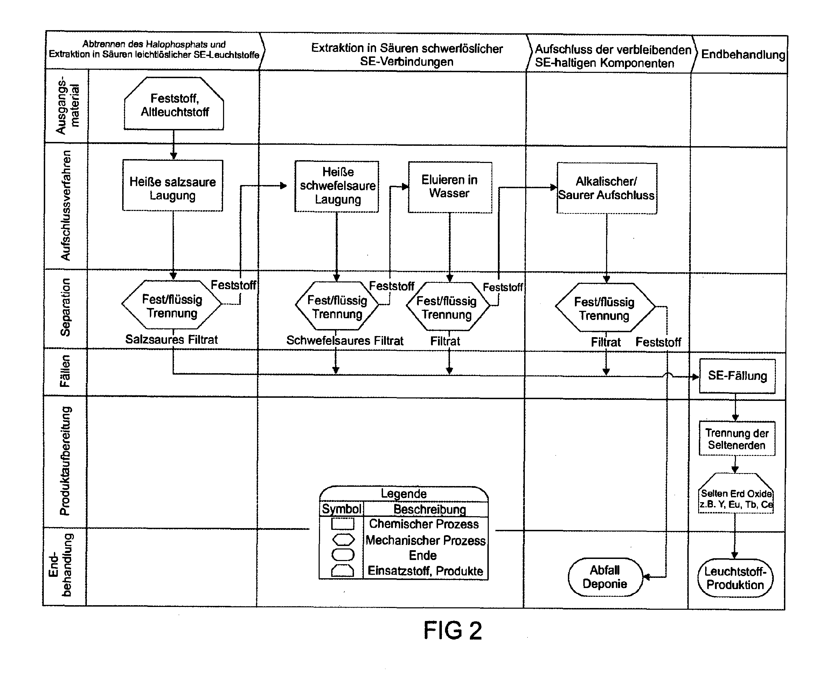

Figur 2 zeigt ein weiteres Ausführungsbeispiel für den Ablauf des Recylcings. abweichend von Schema 1 werden Halophosphat und leichtlösliche Selten Erd haltige Leuchtstoffe zusammen gelöst. Es folgt der Aufschluß der schwerlöslichen Selten Erd Leuchtstoffe in zwei Stufen.

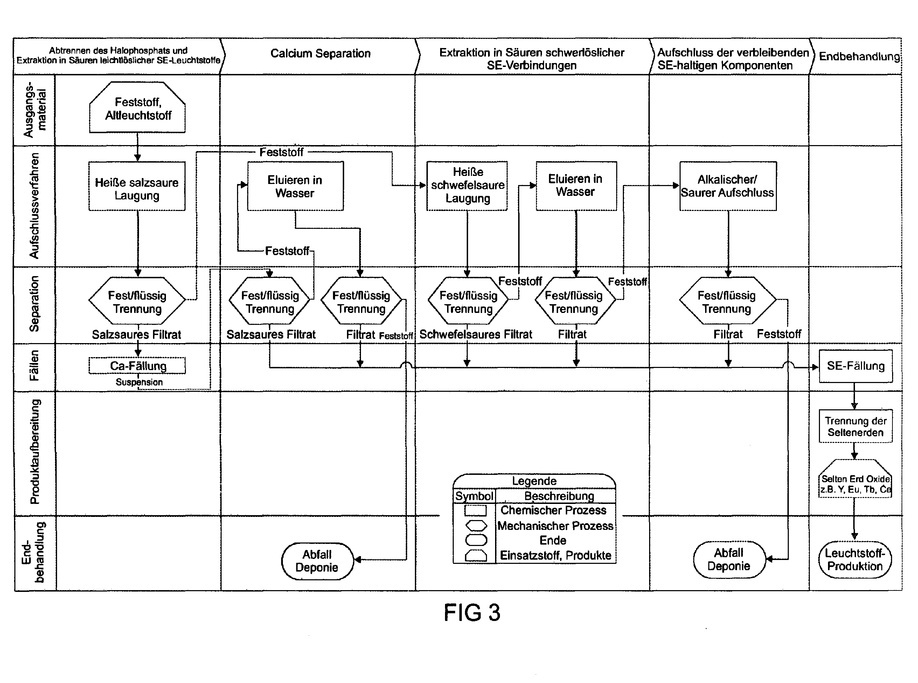

Figur 3 zeigt ein drittes Ausführungsbeispiel für den Ablauf des Recyclings. abweichend von Schema 2 werden nach dem Lösen von Halophosphat und leichtlöslichen Selten Erd haltigen Leuchtstoffen Calciumionen abgetrennt.

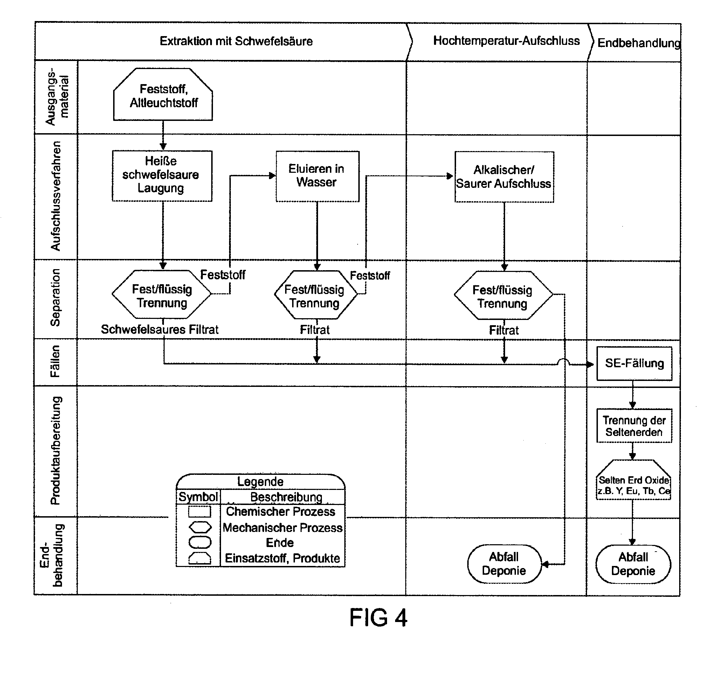

Figur 4 zeigt ein viertes Ausführungsbeispiel für den Aböauf des Recyclings. abweichend von Schema 1-3 werden im ersten Schritt sowohl leicht als auch schwer säurelösliche Verbindungen aufgeschlossen und gleichzeitig Calciumionen abgetrennt.

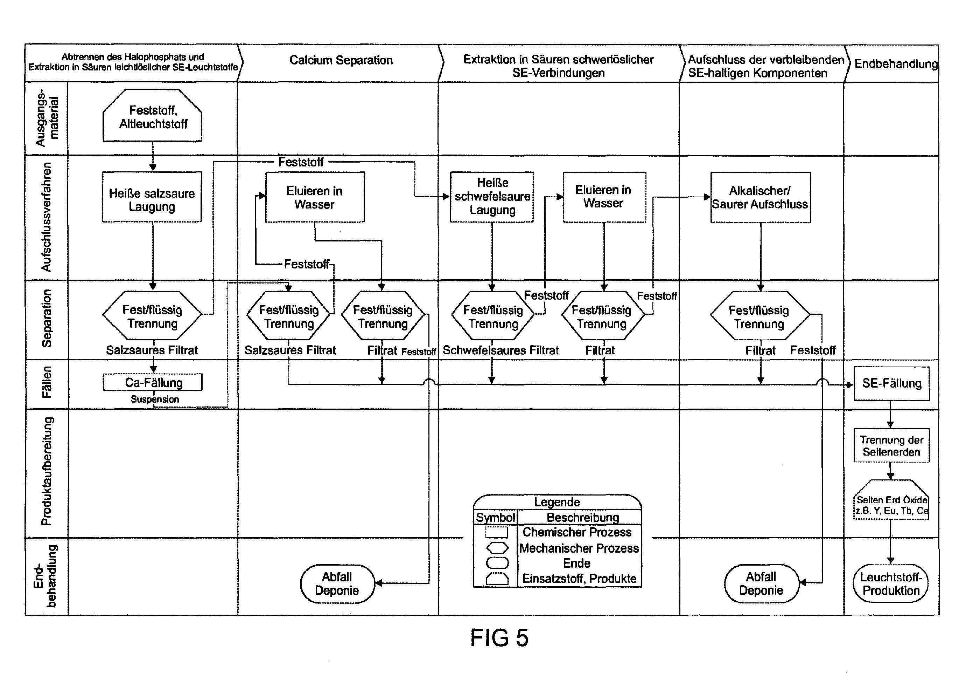

Figur 5 zeigt ein weiteres Ausführungsbeispiel. Prinzipiell ist es möglich und bei bestimmten Leuchtstoffen im Recyclingleuchtstoff auch sinnvoll die bei der Extraktion der SE in mehreren Stufen die flüssige SE haltige Phase nicht mit anderen zu vermischen, sondern separat weiter zu verarbeiten. Bei entsprechenden Voraussetzungen (z.B. Extraktion der SE aus dem Recyclingleuchtstoff und SE Trennungsgang am selben Standort) ist die direkte Trennung ohne vorheriges Fällen und Glühen vorzuziehen.

## Patentansprüche

1. Verfahren zum Wiedergewinnen von Seltenen Erden (SE) aus Lampen-Abfällen, die mehrere Leuchtstoffe enthalten, wobei ein wesentlicher Teil, insbesondere mehr als 60 Gew.-%, der Leuchtstoffe HaloDhosphate und Selten Erd -Leuchtstoffe sind, mit der Abfolge folgender Verfahrensschritte:
a) mechanisches Abtrennen von Grobanteilen;
b) Abtrennen von Halophosphaten;
c) alkalischer Aufschluss von SE-haltigen Komponenten;
d) Endbehandlung, bei der SE-Oxide erzeugt werden:
**dadurch gekennzeichnet, dass der Schritt c) mindestens einen der folgenden Schritte umfasst:**
c1) Aufschluss mit Kali- oder Natronlauge;
c2) Aufschluss mit Soda/Pottasche Schmelze.

2. Verfahren nach Anspruch 1, **dadurch gekennzeichnet, dass** der Schritt c1) unter Druck erfolgt.

3. Verfahren nach Anspruch 1, **dadurch gekennzeichnet, dass** der Schritt c2) beinhaltet, dass Aluminate mit einer Mischung von Soda und Pottasche geschmolzen, wobei insbesondere der Schmelzkuchen mit Wasser oder Säure extrahiert wird.

## Claims

1. Method for recovering rare earths (RE) from lamp waste which contains a plurality of fluorescent materials, an essential part, in particular more than 60% by weight, of the fluorescent materials being halophosphates and rare earth fluorescent materials, having the following sequence of method steps:
a) mechanical separation of coarse parts;
b) separation of halophosphates;
c) alkaline digestion of components containing RE;
d) final treatment, in which RE oxides are produced; **characterized in that** step c) comprises at least one of the following steps:
c1) digestion by potassium or sodium hydroxide;
c2) digestion by soda/potash melt.

2. Method according to Claim 1, **characterized in that** step c1) is carried out under pressure.

3. Method according to Claim 1, characterized in that_step c2) involves melting aluminates by a mixture of soda and potash, the melt cakes being in particular extracted with water or acid.

## Revendications

1. Procédé de récupération de terres rares (SE) de lampes usagées, lesquelles lampes contiennent plusieurs luminophores dont une partie considérable, en particulier plus de 60 % en poids, sont des halophosphates et des luminophores aux terres rares, comprenant la succession des étapes suivantes :
a) séparation mécanique des fractions grossières ;
b) séparation des halophosphates ;
c) attaque alcaline des constituants contenant des terres rares ;
d) traitement final consistant à produire des oxydes de terres rares ;
**caractérisé en ce que** l'étape c) comprend au moins l'une des étapes suivantes :
c1) attaque au moyen d'une solution d'hydroxyde de potassium ou de sodium ;
c2) attaque au moyen d'un bain de soude/potasse fondue.

2. Procédé selon la revendication 1, **caractérisé en ce que** l'étape c1) s'effectue sous pression.

3. Procédé selon la revendication 1, **caractérisé en ce que** l'étape c2) comprend la fusion des aluminates au moyen d'un mélange de soude et de potasse, et en particulier le gâteau de fusion est extrait avec de l'eau ou de l'acide.
